Europäisches Patentamt

European Patent Office

Office européen des brevets

(11) Veröffentlichungsnummer: **0 391 198 B1**

(12) **EUROPÄISCHE PATENTSCHRIFT**

(45) Veröffentlichungstag der Patentschrift: **05.01.94**

(21) Anmeldenummer: **90105717.4**

(22) Anmeldetag: **26.03.90**

(51) Int. Cl.⁵: **B65G 43/08**, B65G 47/51

(54) **Verfahren zur Verbesserung der Pufferhaltung in Fliessproduktionsprozessen, insbesondere in Flaschenkelleranlagen.**

(30) Priorität: **06.04.89 DE 3911209**

(43) Veröffentlichungstag der Anmeldung:
**10.10.90 Patentblatt 90/41**

(45) Bekanntmachung des Hinweises auf die
Patenterteilung:
**05.01.94 Patentblatt 94/01**

(84) Benannte Vertragsstaaten:
**AT CH DE FR IT LI**

(56) Entgegenhaltungen:
**EP-A- 0 136 827**

**PATENT ABSTRACTS OF JAPAN, Band 11,
Nr. 39 (M-559)[2486], 5. Februar 1987; & JP-
A-61 206 718 (HITACHI) 13-09-1986**

**PATENT ABSTRACTS OF JAPAN, Band 8, Nr.
249 (M-338)[1686], 15. November 1984; & JP-
A-59 124 615 (FUJITSU) 18-07-1984**

(73) Patentinhaber: **SIEMENS AKTIENGESELL-
SCHAFT
Wittelsbacherplatz 2
D-80333 München(DE)**

(72) Erfinder: **Steidl, Siegbert, Dipl.-Ing.
Bahnstrasse 5
D-8520 Erlangen-Eltersdorf(DE)**
Erfinder: **Tautz, Wilfried, Dr.
Rotreuzstrasse 28c
D-8550 Forchheim(DE)**

## Beschreibung

Die Erfindung betrifft ein Verfahren zur Verbesserung der Pufferhaltung in Fließproduktionsprozessen, in denen mehrere, parallel arbeitende Behandlungsmaschinen jeweils Stückgutströme über Transportzweige, bestehend aus einem oder mehreren Transporteuren und Verteilungen, aus einem gemeinsamen Zuförderbereich zugeführt bekommen.

In der Lebensmittelindustrie stellen die Flaschenkelleranlagen zur Getränkeabfüllung dynamische Systeme hoher Komplexität dar, an deren Automatisierung wachsende Anforderungen gestellt werden. Entsprechend den Vorgaben seitens der Betreiber erfolgt die Auslegung der Anlagenautomatisierung mit der Zielsetzung, den Durchsatz zu erhöhen, die Anlage und das jeweilige Gut (Kästen, Flaschen, Dosen) zu schonen und den entstehenden Lärm zu reduzieren. Eine Durchsatzerhöhung kann u.a. dadurch erreicht werden, daß der technologisch schwierige Füllvorgang weniger als bisher unterbrochen wird. Es wird daher angestrebt, die Flaschenkelleranlagen so zu steuern, daß Störungen in anderen Anlagenteilen sich möglichst wenig auf den Füllvorgang auswirken.

Bei den genannten Flaschenkelleranlagen handelt es sich um Fließproduktionsprozesse, die dadurch gekennzeichnet sind, daß Stückgut eine Vielzahl von Behandlungsmaschinen durchläuft. Diese sind durch Transporteure miteinander verbunden, die neben Transportfunktionen auch Pufferfunktionen wahrnehmen. Eine Rechnersteuerung einer solchen Anlage mit Verfolgung der Flaschen ist beispielsweise aus der E-A- 66 119 bekannt.

Die hier vorgestellte Erfindung löst die Aufgabe, in solchen Fließproduktionsprozessen die Pufferhaltung zu verbessern, so daß die Behandlungsmaschinen besser versorgt werden und sich dadurch der Durchsatz erhöht.

Diese Aufgabe wird erfindungsgemäß mit den Maßnahmen des Anspruchs 1 gelöst.

So kann im Rahmen einer solchen Anlage durch gezielte Leistungsreduzierung die Zahl der Maschinenabschaltungen verringert werden, sobald die Befüllung der Transporteure einen Zustand erreicht, der bei fortgesetzter Fahrweise mit maximaler Leistung zu Maschinenabschaltungen führen würde. Da im Falle einer solchen Leistungsreduzierung die Abarbeitung des jeweiligen Gutes lediglich zeitlich verschoben erfolgt, ist der insgesamt erzielte Durchsatz gegenüber einer konventionellen Steuerung höher oder mindestens genauso hoch.

Die Erfindung bezieht sich generell auf Fließproduktionsprozesse. Sie wird jedoch im folgenden beispielhaft anhand einer Flaschenkelleranlage beschrieben; es zeigen:

FIG 1    den Leitmaschinenbereich einer Flaschenkelleranlage,

FIG 2    die Durchsatzleistungen in verschiedenen Teilen,

FIG 3    einen vereinfachten Leitmaschinenbereich der Anlage und

FIG 4    Leistungen im Leitmaschinenbereich bei Leistungsreduzierung.

Die gesamte Erfindung besteht aus den Komponenten "Umverteilung" und "Leistungsreduzierung". Die "Umverteilung" kann in einem Fließproduktionsprozeß immer dann eingesetzt werden, wenn mehrere parallel arbeitende Behandlungsmaschinen über Transportzweige und Verteilungen aus einem gemeinsamen Zuförderbereich versorgt werden. Für den Einsatz der "Leistungsreduzierung" bestehen keine Einschränkungen.

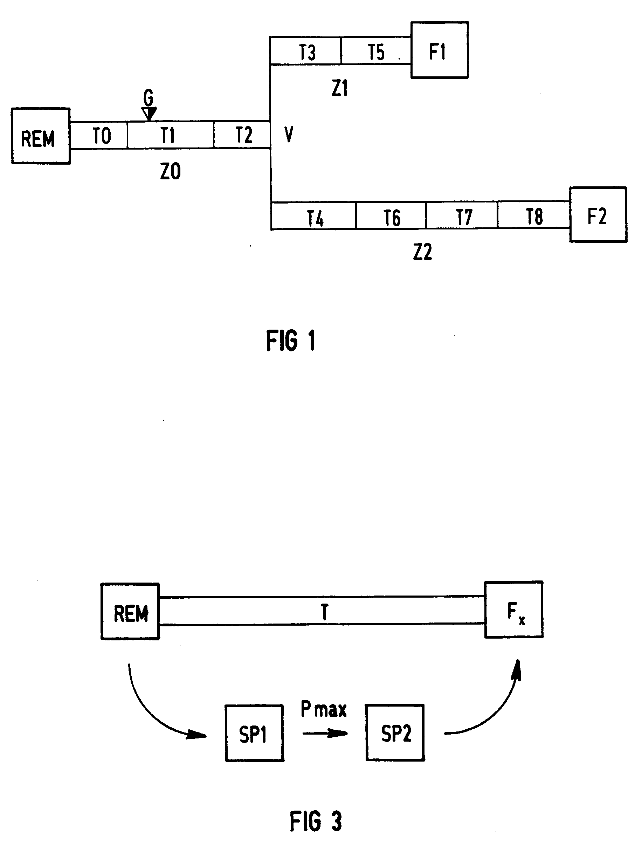

Das Konzept der Erfindung wird beispielhaft anhand des Leitmaschinenbereichs einer Flaschenkelleranlage beschrieben (FIG 1). Hier liefert eine gemeinsame Reinigungsmaschine REM Flaschen für zwei Füller F1, F2. Von der Reinigungsmaschine REM bis zur Verteilung V laufen die Flaschen über einen gemeinsamen Transportweg Z0 mit drei hintereinandergeschalteten Transporteuren T0, T1, T2. An der Verteilung V beginnen separate Transportzweige Z1, Z2 für die beiden Füller F1, F2. Der kurze Zweig Z1 besteht aus zwei Transporteuren T3, T5, während der lange Zweig aus den vier Transporteuren T4, T6, T7, T8 besteht.

Durch die hier beschriebene "Umverteilung" werden auch bei unterschiedlich langen Zweigen Z1, Z2 die Flaschen vor der Verteilung so auf die beiden Füller F1, F2 aufgeteilt, daß die Summe der Durchsätze maximal wird. Ohne diese Maßnahme würde nach einem Stillstand der Reinigungsmaschine REM (Störung) der Füller F1, des kurzen Zweiges Z1 wegen der geringen Pufferwirkung dieses Zweiges seinen Flaschenanteil eher abgearbeitet haben und zum Stehen kommen. Demgegenüber sorgt die "Umverteilung" in dem genannten Fall dafür, daß die Flaschen bei der Verteilung V zugunsten des kurzen Zweiges Z1 so umverteilt werden, daß beide Füller F1, F2 gleichmäßig mit Flaschen beliefert werden. Auf diese Weise sind längere Stillstandszeiten der Reinigungsmaschine REM zulässig, ohne daß der Durchsatz der Füller F1, F2 beeinträchtigt wird. Der durch die "Umverteilung" erzielbare Gewinn ist um so größer, je mehr sich die beiden Zweige Z1, Z2 hinsichtlich ihrer Länge und damit in ihrer Pufferkapazität unterscheiden.

Überschreitet die Stillstandszeit der Reinigungsmaschine REM einen bestimmten Wert, so läßt sich trotz "Umverteilung" eine Beeinflussung der Füllerleistungen nicht vermeiden. Diese Situation ist dadurch gekennzeichnet, daß die Abarbeitung der noch vorhandenen Flaschen durch die Füller F1, F2 weniger lange dauern würde als die Laufzeit neuer Flaschen von der Reinigungsmaschine REM zum jeweiligen Füller F1, F2. Würden die Füller in dieser Situation mit maximalen Leistungen weiterarbeiten, so würden sie zwingend wegen Flaschenmangels zum Stehen kommen, da neu gelieferte Flaschen die Füller nicht mehr rechtzeitig erreichen könnten. Die "Leistungsreduzierung" kann das Erreichen dieser Situation erkennen. Sie reagiert darauf mit gezielten Leistungsreduzierungen der Füller. Obwohl dadurch der momentane Durchsatz zurückgeht, wird der insgesamt erzielte Durchsatz nicht vermindert, denn die Abarbeitung der noch vorhandenen Flaschen erstreckt sich lediglich auf einen größeren Zeitraum. Der Vorteil dieses Vorgehens ist, daß sich durch die Verlängerung der Abarbeitungszeit die Zahl der Füllerabschaltungen verringert.

Im einzelnen:

Die Beschreibung der "Umverteilung" erfolgt hier beispielhaft anhand des Leitmaschinenbereichs einer Flaschenkelleranlage FIG 1. Für die Realisierung ist es notwendig, die Flaschenzahlen

- n0 zwischen Reinigungsmaschine REM und Verteilung V im gemeinsamen Transportweg Z0
- n1 im kurzen Zweig Z1 und
- n2 im langen Zweig Z2

zu kennen. Der Nennzustand des Leitmaschinenbereichs ist dadurch charakterisiert, daß der gesamte Bereich im wesentlichen vollständig mit Flaschen gefüllt ist. In diesem Zustand werden für die Flaschenzahlen n0, n1 und n2 die baulich bedingten Maximalwerte angenommen, die sich aus den Längen und Breiten der Transporteure T1 bis T8 ergeben. Wird der Nennzustand z.B. durch einen Stillstand der Reinigungsmaschine REM verlassen, was durch das Freiwerden eines Aktivierungsgebers G hinter der Reinigungsmaschine REM signalisiert wird, so werden die aktuellen Flaschenzahlen n0, n1, und n2 durch ein mathematisches Modell errechnet. In dieses gehen als Prozeßinformationen die aktuellen Leistungen der Reinigungsmaschine REM und der beiden Füller F1, F2 sowie die Geschwindigkeiten des direkten Zuförderers T2 und der beiden direkten Abförderer der Verteilung T3, T4 ein. Die Arbeitsweise dieses mathematischen Modells wird im folgenden dargelegt.

Der Bereich Z0 von der Reinigungsmaschine REM bis zur Verteilung V wird durch ein Totzeitglied in Form eines FIFO-Speichers in einem Rechner modelliert. Die Totzeit wird gleich der Flaschenlaufzeit in diesem Bereich Z0 gewählt. Die Flaschenlaufzeit dividiert durch die Abtastzeit ergibt somit die Länge des FIFO-Speichers, also die Zahl der Speicherplätze. Die Eingangsgröße des FIFO-Speichers ist die während einer Abtastperiode von der Reinigungsmaschine gelieferte Flaschenzahl. Nach dem Durchlauf durch den FIFO-Speicher, der den Transportvorgang modelliert, gelangen die Flaschen in einen Abgabespeicher. Dieser wird neben rechentechnischen Gründen für einen eventuellen Flaschenrückstau benötigt. Nur die Flaschen in diesem Abgabespeicher kann das Modell an die beiden Zweige Z1, Z2 abgeben. Die Flaschenzahl n0 ist die Summe der Flaschenzahlen im FIFO-Speicher und im Abgabespeicher.

Wieviele Flaschen n1, n2 sich im kurzen und langen Zweig Z1, Z2 befinden, berechnet das mathematische Modell ausgehend von den im vergangenen Abtastzeitpunkt errechneten Flaschenzahlen n1 und n2 in folgenden vier Schritten:

- n1 und n2 werden um die vom jeweiligen Füller F1, F2 in der betrachteten Abtastperiode abgearbeiteten Flaschenzahlen vermindert.
- Die maximal möglichen Flaschenzuflüsse in die beiden Zweige Z1, Z2 ergeben sich aus den Breiten und Geschwindigkeiten der jeweils ersten Transporteure T3, T4. Diese werden nach oben so begrenzt, daß bei Addition zu n1 bzw. n2 die baulich bedingten maximalen Flaschenzahlen in den Zweigen Z1, Z2 nicht überschritten werden.
- Das Angebot des zufördernden Transporteurs T2 an die Verteilung V wird durch seine Breite und seine Geschwindigkeit bestimmt, wobei die obere Grenze dieses Wertes die Flaschenzahl im Abgabespeicher ist.
- Dieses Angebot des Transporteurs T2 wird nun in die beiden Zweige verteilt, wobei die errechneten maximal möglichen Flaschenzuflüsse nicht überschritten werden dürfen. Ist ein Zweig nicht in der Lage, seinen Anteil des Angebots aufzunehmen, so werden die übrigen Flaschen dem anderen Zweig zugeführt, soweit hier der maximal mögliche Flaschenzufluß dieses noch zuläßt. Nachdem so berechnet wurde, wieviele Flaschen in die Zweige Z1, Z2 gelangen, werden diese Zahlen vom Abgabespeicher subtrahiert und zu n1 bzw. n2 addiert.

Um einen möglichst hohen Durchsatz zu erreichen, ist man bestrebt, die Füller so zu versorgen, daß sie ununterbrochen mit maximaler Leistung arbeiten können. Dieses ist dann gegeben, wenn ihnen zu jedem Zeitpunkt bestimmte Mindestflaschenzahlen nmin1, nmin2 zur Verfügung stehen. Diese errechnen sich aus den Füllmaximalleistungen Pmax1, Pmax2 und den Flaschenlaufzeiten T1, T2 von der Reinigungsmaschine REM zum jeweiligen Füller F1, F2 nach den Beziehungen

$$nmin1 = Pmax1 \cdot T1$$
$$nmin2 = Pmax2 \cdot T2.$$

Sobald auch nur kurzzeitig diese Mindestflaschenzahlen unterschritten werden, führt dieses zwingend zu Abschaltungen bzw. Leistungsreduzierungen der Füller, da neu gelieferte Flaschen nicht mehr rechtzeitig die Füller F1, F2 erreichen können.

Der maximale Durchsatz im Leitmaschinenbereich nach FIG 1 wird dann erreicht, wenn die vorhandenen Flaschen n0, n1, n2 so auf die Füller F1, F2 verteilt werden, daß jeder Füller zunächst seine Mindestflaschenzahl nmin1, nmin2 erhält und die übrigen Flaschen zu gleichen Teilen aufgeteilt werden. Da die Flaschen n1, n2 in den Zweigen Z1, Z2 den Füllern bereits fest zugeordnet sind, bedeutet dies, daß von den Flaschen n0 vor der Verteilung V

$$n01 = (n0 - n1 + n2 + nmin1 - nmin2) / 2$$

dem kurzen Zweig und

$$n02 = (n0 + n1 - n2 - nmin1 + nmin2) / 2$$

dem langen Zweig zugeführt werden müssen. Dem Füller F1 des kurzen Zweiges Z1 stehen dann n01 + n1 und dem Füller F2 des langen Zweiges Z2 n02 + n2 Flaschen zur Verfügung. Die Zahl der umzuverteilenden Flaschen ist

$$numzu = n01 - n02 = n2 - nmin2 - n1 + nmin1$$

Die "Umverteilung" bewirkt nun, daß von den n0 Flaschen vor der Verteilung V der kurze Zweig numzu Flaschen allein erhält, während die übrigen Flaschen zu gleichen Teilen in beide Zweige Z1, Z2 verteilt werden.

Für die Realisierung ist es notwendig, den Flaschenzustrom in den langen Zweig zu unterbrechen oder zu reduzieren. Dieses kann z.B. durch eine geeignete Steuerung des ersten Transporteurs T4 des langen Zweiges Z2 geschehen. Durch Stehenlassen oder durch eine sehr geringe Geschwindigkeit gelangen keine oder nur sehr wenige Flaschen in den langen Zweig Z2, während der Flaschenzustrom in den kurzen Zweig Z1 nicht beeinflußt wird. Um unnötige Eingriffe in den Lauf der Anlage zu vermeiden, beginnt eine Umverteilung immer erst zum spätest möglichen Zeitpunkt.

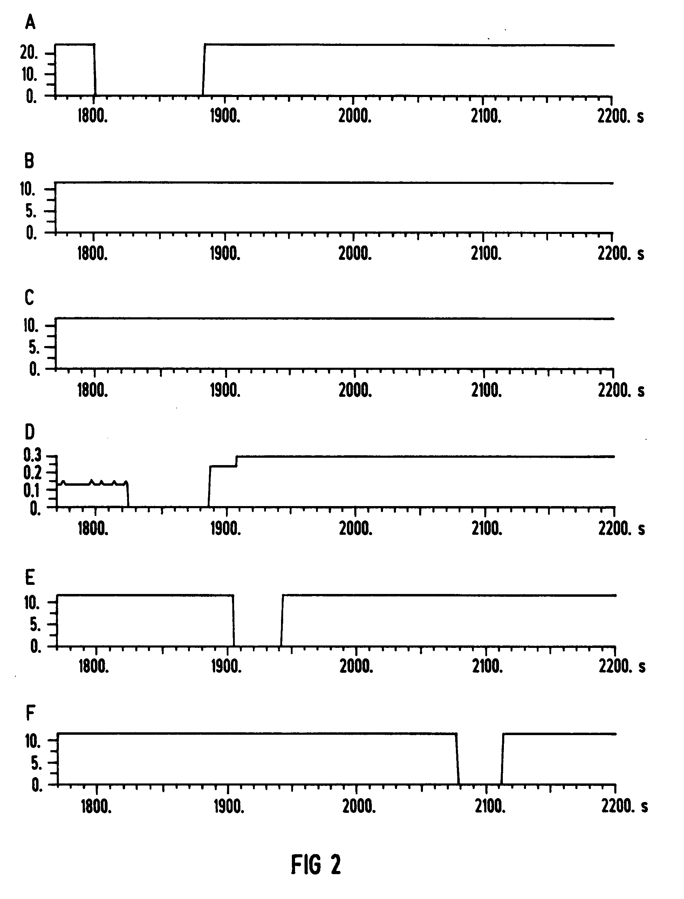

Wie sich die "Umverteilung" beispielsweise im Leitmaschinenbereich nach Bild 1 auswirkt, ist in FIG 2 zu sehen. Hier sind über der Zeit aufgetragen:

A　Leistung der Reinigungsmaschine REM in Flaschen/s

B　Leistung des Füllers F1 des kurzen Zweiges Z1 bei "Umverteilung" in Flaschen/s

C　Leistung des Füllers F2 des langen Zweiges Z2 bei "Umverteilung" in Flaschen/s

D　Geschwindigkeit des ersten Transporteurs T4 im langen Zweig Z2 in m/s

E　Leistung des Füllers F1 des kurzen Zweiges Z1 bei "konventioneller Steuerung" in Flaschen/s

F　Leistung des Füllers F2 des langen Zweiges Z2 bei "konventioneller Steuerung" in Flaschen/s.

Ausgehend vom Nennzustand der Anlage erfolgt ein Stillstand der Reinigungsmaschine REM von 83 s (A). Durch die Umverteilung werden beide Füller ausreichend versorgt, so daß sie ohne Unterbrechung mit maximalen Leistungen durcharbeiten können (B, C). Die Realisierung erfolgt hier durch Stehenlassen des ersten Transporteurs im langen Zweig (D). Dieses beginnt dann, wenn sich unmittelbar vor der Verteilung gerade noch die umzuverteilenden Flaschen befinden, die der kurze Zweig allein erhalten muß. Im Vergleich dazu fallen bei konventioneller Steuerung der Füller des kurzen Zweiges für 38 s (E) und der Füller des langen Zweiges für 35 s (F) aus, was in diesem Beispiel einer Durchsatzminderung von 852 Flaschen entspricht.

Wie bereits dargelegt, sind für die Füller bestimmte verfügbare Mindestflaschenzahlen (nmin1, nmin2) erforderlich, um einen ununterbrochenen Betrieb mit maximalen Leistungen sicherzustellen. Werden im Falle des Unterschreitens dieser Mindestflaschenzahlen die Füller weiterhin mit maximalen Leistungen betrieben, so führt dieses zwingend zu Füllerabschaltungen wegen Flaschenmangels. Werden jedoch die Leistungen reduziert, so verlängert sich die Abarbeitungszeit der noch vorhandenen Flaschen. Dadurch ergibt sich die Möglichkeit, daß, bevor die noch vorhandenen Flaschen vollständig abgearbeitet sind, diese von neu gelieferten eingeholt werden, so daß nicht abgeschaltet werden muß. Wenn von den reduzierten Leistungen rechtzeitig auf die maximalen Leistungen zurückgeschaltet wird, so ist der insgesamt erzielte Durchsatz gegenüber einer Fahrweise ohne Leistungsreduzierung höher oder mindestens genau so hoch.

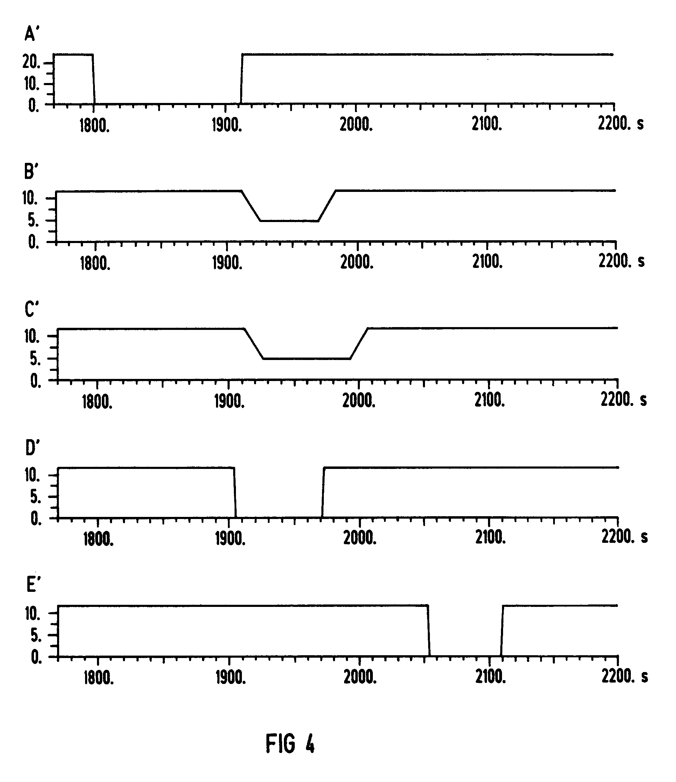

Die Komponente "Leistungsreduzierung" innerhalb der hier beschriebenen Erfindung verringert auf diese Weise die Zahl der Füllerabschaltungen, ohne den insgesamt erzielten Durchsatz zu beeinträchtigen. Die prinzipielle Arbeitsweise wird anhand eines vereinfachten Leitmaschinenbereichs FIG 3 beschrieben. Hier versorgt eine Reinigungsmaschine REM einen einzigen Füller $F_x$ über eine Transportstrecke T. Die aktuellen Leistungen der Reinigungsmaschine und des Füllers müssen zur Verfügung stehen (z.B. Tachogeneratoren). Die Mindestflaschenzahl für diese Anordnung sei nmin.

Für die erforderlichen Flaschenrechnungen werden zwei Speicher SP1, SP2 in einem Rechner benötigt. Wie in FIG 3 angedeutet, werden in jedem Abtastzeitpunkt die folgenden drei Schritte durchlaufen:

- In den ersten Speicher SP1 wird die von der Reinigungsmaschine REM in der vergangenen Abtastperiode gelieferte Flaschenzahl addiert.
- Aus dem ersten Speicher SP1 werden soviele Flaschen in den zweiten Speicher SP2 umgespeichert, wie der Füller $F_x$ in einer Abtastperiode mit maximaler Leistung Pmax abarbeiten kann. Dieser Wert wird nach oben durch die im ersten Speicher SP1 vorhandene Flaschenzahl begrenzt.
- Aus dem zweiten Speicher SP2 wird die von dem Füller in der vergangenen Abtastperiode abgearbeitete Flaschenzahl subtrahiert.

Der Inhalt des zweiten Speichers SP2 gibt nun unmittelbar an, wie der Füller $F_x$ gesteuert wird, in welchen Zeitbereichen also die Leistung reduziert wird. Wenn der Inhalt größer als die Mindestflaschenzahl nmin ist, läuft der Füller mit maximaler Leistung. Anderenfalls wird seine Leistung reduziert und er läuft mit reduzierter Leistung. Das Umschalten von der maximalen auf die reduzierte Leistung und umgekehrt kann beispielsweise sprungförmig oder rampenförmig geschehen. Des weiteren kann das Reduzieren der Leistung zeitlich verzögert werden, um für möglicherweise bevorstehende Füllerstörungen eine gewisse Reserve zu haben.

Das anhand des vereinfachten Leitmaschinenbereichs nach FIG 3 beschriebene Verfahren ist auch bei anderen Konstellationen in gleicher Weise verwendbar, z.B. bei einem Leitmaschinenbereich mit zwei Füllern nach FIG 1. Hier sind dann jedem Füller zwei Speicher für die Flaschenrechnungen zuzuordnen.

Wie sich die "Leistungsreduzierung" kombiniert mit der "Umverteilung" beispielsweise im Leitmaschinenbereich nach FIG 1 auswirkt, ist in FIG 4 zu sehen. Hier sind über der Zeit aufgetragen:

A′     Leistung der Reinigungsmaschine REM in Flaschen/s

B′     Leistung des Füllers F1 des kurzen Zweiges Z1 bei "Leistungsreduzierung" und "Umverteilung" in Flaschen/s

C′     Leistung des Füllers F2 des langen Zweiges Z2 bei "Leistungsreduzierung" und "Umverteilung" in Flaschen/s

D′     Leistung des Füllers F1 des kurzen Zweiges Z1 bei "konventioneller Steuerung" in Flaschen/s

E′     Leistung des Füllers F2 des langen Zweiges Z2 bei "konventioneller Steuerung" in Flaschen/s

Ausgehend vom Nennzustand der Anlage erfolgt ein Stillstand der Reinigungsmaschine von 112s (A′). Die "Leistungsreduzierung" und die "Umverteilung" sorgen dafür, daß keine Füllerstillstände auftreten. Jedoch werden die Leistungen für eine gewisse Zeit reduziert, so daß sich eine Durchsatzminderung von 973 Flaschen ergibt (B′, C′). Im Gegensatz dazu fallen bei konventioneller Steuerung der Füller des kurzen Zweiges für 67 s (D′) und der Füller des langen Zweiges für 56 s (E′) aus, so daß hier die Durchsatzminderung 1436 Flaschen beträgt.

**Patentansprüche**

1.   Verfahren zur Verbesserung der Pufferhaltung in einem Fließproduktionsprozeß aus

a) mindestens zwei parallel arbeitenden Behandlungsmaschinen (F1,F2) mit jeweils einem vorgelagerten Transportzweig (Z1,Z2), denen ein Stückgutstrom über eine Verteilung (V) aus einem gemeinsamen Zuförderbereich (Z0) zugeführt wird, wobei die Transportzweige (Z1,Z2) unterschiedliche Längen (T3,T5;T4,T6,T7,T8), Breiten und/oder Fördergeschwindigkeiten aufweisen können und jeweils aus mindestens einem Transporteur (T3;T4) bestehen, mit

b) rechnergesteuerten Mitteln, welche die Anzahlen (n0;n1,n2) der aktuell im Zuförderbereich (Z0) und den Transportzweigen (Z1,Z2) vor den Behandlungsmaschinen (F1,F2) befindlichen Stückgütern des Gutstromes ermitteln, und mit

c) Steuermitteln, welche mit Hilfe der Anzahlen (n0;n1,n2) die Verzweigung (V) und/oder die Fördergeschwindigkeit (T4) von mindestens einem Transportzweig (Z2) im Sinne einer Umverteilung des Stückgutstromes zu Gunsten von mindestens einem Transportzweig (Z1) derart beeinflussen, daß unter Berücksichtigung der maximalen Bearbeitungsleistungen der einzelnen Bearbeitungsmaschinen (F1,F2) die Transportzweige (Z1,Z2) entsprechend ihrer durch Länge, Breite und Fördergeschwindigkeit bestimmten Pufferwirkung gleichmäßig mit Stückgut belegt sind, so daß auch insbesondere bei einer vorübergehenden Unterbrechung des Stückgutzustromes zum Zuförderbereich (Z0) kein vorzeitiger Stillstand einseitig bei einer der parallelen Bearbeitungsmaschinen (Z1,Z2) auftritt.

2.   Verfahren nach Anspruch 1, bei dem die Steuermittel die Umverteilung (numzu) der Stückgüter zu Gunsten eines Transportzweiges (Z1) durch vorübergehende Stillegung bzw. Geschwindigkeitsreduzierung bei mindestens einem anderen Transportzweig (Z2,T4) bewirken.

**3.** Verfahren nach Anspruch 1 oder 2, bei dem die Steuermittel die zu Gunsten von mindestens einem Transportzweig (Z1) aus den auf dem gemeinsamen Zuförderbereich (Z0) befindlichen Stückgütern (n0 = n01 + n02) umzuverteilende Anzahl (numzu) derart ermitteln, daß jeder Transportzweig (Z1;Z2) zumindest mit Stückgütern (n01 + n1;n02 + n2) in der von der Bearbeitungsleistung der dahinter befindlichen Bearbeitungsmaschine (F1,F2) abhängigen Mindestanzahl (nmin1, nmin2) belegt ist, welche einen Betrieb der parallelen Bearbeitungsmaschinen bei maximaler Bearbeitungsleistung ermöglicht, und ein möglicherweise im Zuförderbereich (Z0) vorhandener Überschuß an Stückgütern gleichmäßig auf die Transportzweige (Z1,Z2) aufgeteilt wird.

**4.** Verfahren nach Anspruch 3, bei dem zur Bestimmung der Anzahl (numzu) der umzuverteilenden Stückgüter die Bearbeitungsleistungen der parallel arbeitenden Behandlungsmaschinen (F1,F2), die Leistung einer den Zuförderbereich mit Stückgütern versorgenden Zufördermaschine (REM) und die Breiten und Fördergeschwindigkeiten nur der unmittelbar vor und hinter der Verteilung (V) liegenden Transporteure (T2;T3,T4) des Zuförderbereiches (Z0) und der Transportzeige (Z1,Z2) herangezogen werden.

**5.** Verfahren nach Anspruch 3 oder 4, bei dem in dem Fall, daß die Steuermittel aufgrund eines Mangels an Stückgut im Zuförderbereich (Z0) trotz Umverteilung (numzu) nicht die zum Betrieb mit maximaler Bearbeitungsleistung notwendige Mindestanzahl (nmin1,nmin2) an Stückgut auf jedem Transportzweig (Z1,Z2) bereitstellen können, die Bearbeitungsleistung der Bearbeitungsmaschinen (F1,F2) solange reduziert wird, bis neues Stückgut am Anfang des Zuförderbereiches in ausreichender Anzahl (n0) zugeführt ist und dieses ohne Unterbrechung des Stückgutstromes die Bearbeitungsmaschinen rechtzeitig erreichen kann.

**6.** Verfahren nach Anspruch 5, bei dem die Ermittlung und Verarbeitung der Anzahlen der im Zuförderbereich (Z0,n0) und auf den Transportzweigen (Z1,n1;Z2,n2) aktuell befindlichen und der dort zum Betrieb mit maximaler Leistung notwendigen Mindestanzahlen (nmin1,nmin2) an Stückgütern in einem Rechner mit Hilfe von zwei Speichern (SP1,SP2) pro Bearbeitungsmaschine (Fx) durchgeführt wird.

**7.** Verwendung des Verfahrens nach einem der vorangegangenen Ansprüche bei einer Abfüllanlage, bei der Leerflaschen als Stückgutstrom von einer als Zuförderer (REM) dienenden Reinigungsmaschine bereitgestellt und mindestens zwei als Bearbeitungsmaschinen dienenden Füllern (F1,F2) zugeführt werden.

**Claims**

**1.** Method for the improvement of the buffer supply in a flow-production process with

a) at least two handling machines (F1, F2) which operate in parallel having a respective transport branch (Z1, Z2) which is mounted upstream thereof and to which a flow of piece goods is supplied by way of a distributor (V) from a common feeding conveying region (Z0), in which case the transport branches (Z1, Z2) can have different lengths (T3,T5; T4,T6,T7,T8), widths and/or conveying speeds and in each case consist of at least one transporter (T3; T4), having

b) computer-controlled means, which determine the numbers (n0;n1,n2) of the piece goods of the goods flow currently located in the feeding conveying region (Z0) and the transport branches (Z1,Z2) upstream of the handling machines (F1,F2), and having

c) control means which with the aid of the numbers (n0;n1,n2) influence the branching (V) and/or the conveying speed (T4) of at least one transport branch (Z2) for the purposes of re-distributing the flow of piece goods in favour of at least one transport branch (Z1) in such a way that in consideration of the maximum processing outputs of the individual processing machines (F1,F2), the transport branches (Z1,Z2) are uniformly occupied with piece goods in accordance with their buffer properties determined by length, width and conveying speed, so that even, in particular, in the case of a temporary interruption of the inflow of piece goods to the feeding conveying region (Z0) no premature stoppage occurs on the one side in one of the parallel processing machines (Z1,Z2).

**2.** Method according to claim 1, by which the control means effect the re-distribution (numzu) of the piece goods in favour of a transport branch (Z1) by means of temporary stoppage or reduction in speed in at least one other transport branch (Z2,T4).

**3.** Method according to claim 1 or 2, by which the control means determine the number (numzu), which is to be re-distributed in favour of at least one transport branch (Z1) from the piece goods (n0 = n01 + n02) located in the common feeding conveying region (Z0), in such a way that each transport branch (Z1;Z2) is occupied at least with the minimum number (nmin1, nmin2) of piece goods (n01 + n1; n02 + n2) dependent upon the processing output of the processing machine (F1, F2) located downstream of it, which minimum number renders possible operation of the parallel processing machines with maximum processing output, and any surplus of piece goods present in the feeding conveying region (Z0) is uniformly apportioned to the transport branches (Z1,Z2).

4. Method according to claim 3, by which the processing outputs of the handling machines (F1, F2) operating in parallel, the output of a feeding conveying machine (REM) supplying the feeding conveying region with piece goods and the widths and conveying speeds of just the transporters (T2;T3,T4), lying directly upstream of and downstream of the distributor (V), of the feeding conveying region (Z0) and of the transport branches (Z1, Z2) are used for the purpose of determining the number (numzu) of piece goods to be re-distributed.

5. Method according to claim 3 or 4, by which in the event that on account of a shortage of piece goods in the feeding conveying region (Z0) despite re-distribution (numzu) the control means are unable to make available the minimum number (nmin1, nmin2) of piece goods, necessary for the operation with maximum processing output, on each transport branch (Z1, Z2), the processing output of the processing machines (F1,F2) is reduced for so long until a sufficient number (n0) of new piece goods is supplied at the start of the feeding conveying region and can reach the processing machines in good time without interruption of the piece good flow.

6. Method according to claim 5, by which the determination and processing of the numbers of the minimum numbers (nmin1,nmin2) of piece goods currently located in the feeding conveying region (Z0,n0) and on the transport branches (Z1, n1; Z2, n2) and necessary there for operation with maximum output are carried out in a computer with the aid of two memories (SP1,SP2) per processing machine (Fx).

7. Use of the method according to one of the preceding claims in a filling system, in which empty bottles are made available as a piece good flow by a cleaning machine, serving as a feeding conveyor (REM), and are supplied to at least two fillers (F1,F2) serving as processing machines.

## Revendications

1. Procédé pour améliorer le maintien d'une réserve dans un procédé de fabrication à la chaîne, comprenant

   a) au moins deux machines de traitement (F1,F2) travaillant en parallèle et ayant chacune une voie de transport (Z1,Z2) en amont, auxquels un courant d'objets est envoyé par l'intermédiaire d'un répartiteur (V) depuis une zone commune d'amenée (Z0), les voies de transport (Z1,Z2) pouvant avoir des longueurs différentes (T3,T5;T4,T6,T7,T8), des largeurs différentes et/ou des vitesses de convoyage différentes et étant constituées respectivement d'au moins un transporteur (T3;T4), avec

   b) des moyens pilotés par ordinateur et qui déterminent les nombres (n0;n1,n2) d'objets du courant d'objets, qui sont se trouvent actuellement dans la zone d'amenée (Z0) et dans les voies de transport (Z1,Z2) en amont des machines de traitement (F1,F2), et

   c) des moyens de commande, qui, au moyen des nombres (n0; n1,n2), influent sur la répartition (V) et/ou la vitesse de convoyage (T4) d'au moins une voie de transport (Z2) en rérépartissant le courant d'objets au bénéfice d'au moins une voie de transport (Z1), de sorte que, compte tenu des capacités maximales de traitement des machines de traitement (F1,F2), les voies de transport (Z1,Z2) soient occupées de la même façon par les objets, en fonction de leur effet d'accumulation déterminé par la longueur, la largeur et la vitesse de convoyage, de sorte que, notamment dans le cas d'une interruption transitoire du courant d'amenée d'objets à la zone d'amenée (Z0), il ne se produise pas d'arrêt prématuré unilatéral de l'une des machines parallèles de traitement (Z1,Z2).

2. Procédé suivant la revendication 1, selon lequel les moyens de commande déclenchent la rérépartition (numzu) des objets au bénéfice d'une voie de transport (Z1) par arrêt transitoire ou par réduction transitoire de la vitesse dans au moins une autre voie de transport (Z2,T4).

**3.** Procédé suivant la revendication 1 ou 2, selon lequel les moyens de commande déterminent le nombre (numzu) d'objets qui doivent être rerépartis au bénéfice d'au moins une voie de transport (Z1) parmi les objets (n0 = n01 + n02) se trouvant dans la zone d'amenée (Z0) commune, de sorte que chaque voie de transport (Z1;Z2) soit occupée au moins par des objets (n01 + n1; n02 + n2) présents en le nombre minimum (nmin1,nmin2), qui dépend de la capacité de la machine de traitement (F1,F2) en aval, ce nombre permettant aux machines de traitement parallèles de fonctionner à la capacité maximale de traitement, et un excès d'objets, éventuellement présent dans la zone d'amenée (Z0), est réparti uniformément entre les voies de transport (Z1,Z2).

**4.** Procédé suivant la revendication 3, selon lequel pour la détermination du nombre (numzu) des objets a rerépartir, on utilise les capacités de traitement des machines de traitement (F1,F2) travaillant en parallèle, la capacité d'une machine d'amenée (REM) alimentant la zone d'amenée en objets, et les largeurs et les vitesses de convoyage uniquement des transporteurs (T2;T3;T4), de la zone d'amenée (Z0) et des voies de transport (Z1,Z2) qui sont juste en amont et en aval du répartiteur (V).

**5.** Procédé suivant la revendication 3 ou 4, selon lequel, dans le cas où les moyens de commande ne peuvent pas fournir le nombre minimum (nmin1,nmin2) d'objets qui est nécessaire pour le fonctionnement à la capacité maximale de traitement, à chaque voie de transport (Z1,Z2), en raison d'un manque d'objets dans la zone d'amenée (Z0), en dépit d'une rerépartition (numzu), la capacité de traitement des machines de traitement (F1,F2) est réduite jusqu'à ce qu'un nombre suffisant (n0) de nouveaux objets soit envoyé au début de la zone d'amenée et que ces objets puissent atteindre à temps les machines de traitement, sans interruption du courant d'objets.

**6.** Procédé suivant la revendication 5, selon lequel la détermination et le traitement des nombres des objets se trouvant actuellement dans la zone d'amenée (Z0,n0) et dans les voies de transport (Z1,n1;Z2,n2) et des nombres minimum (nmin1,nmin2) d'objets, qui sont nécessaires dans ces voies de transport pour obtenir le fonctionnement avec la capacité maximale, sont effectués dans un ordinateur à l'aide de deux mémoires (SP1,SP2) pour chaque machine de traitement (Fx).

**7.** Utilisation du procédé suivant l'une des revendications précédentes dans une installation de vidange, dans laquelle des bouteilles vides sont mises sous la forme d'un courant d'objets par une machine de nettoyage servant de dispositif d'amenée (REM) et sont envoyées au moins à deux dispositifs de remplissage (F1,F2), servant de machines de traitement.

**FIG 1**

**FIG 3**

FIG 2

FIG 4